# EUROPÄISCHE PATENTSCHRIFT

(11) **EP 1 972 828 B1**
(45) Veröffentlichungstag und Bekanntmachung des Hinweises auf die Patenterteilung: **29.08.2012**
(21) Anmeldenummer: 08003332.7
(22) Anmeldetag: 25.02.2008
(51) Int. Cl.: F16F 15/123, F16F 15/139, F16F 15/129

(54) **Drehschwingungsdämpfer**
Rotational damper
Amortisseur en rotation

(30) Priorität: 22.03.2007 DE 102007013791
(43) Veröffentlichungstag der Anmeldung: 24.09.2008
(73) Patentinhaber: Schaeffler Technologies AG & Co. KG, 91074 Herzogenaurach (DE)
(72) Erfinder: Lehmann, Steffen, 76275 Ettlingen (DE); Weller, Uwe, 76199 Karlsruhe (DE)

(56) Entgegenhaltungen:
- DE-A1- 19 522 225
- DE-A1- 19 616 479
- DE-A1- 19 753 557
- FR-A1- 2 652 399
- FR-A1- 2 797 010
- JP-A- 58 084 257

## Beschreibung

Die Erfindung betrifft einen Drehschwingungsdämpfer mit einer Hauptdämpfungseinrichtung und einer Vordämpfungseinrichtung, die bis zu einem Vordämpfungswinkel wirksam ist und einen Vordämpfungsflansch umfasst, der einerseits an ersten Kopplungsstellen mit Vordämpfungsfederelementen und andererseits an zweiten Kopplungsstellen mit einer Nabeneinrichtung gekoppelt ist.

Ein derartiger Drehschwingungsdämpfer ist beispielsweise aus der DE 19522225 A1 und oder DE 197 53 557 A1 bekannt.

Aufgabe der Erfindung ist es, einen Drehschwingungsdämpfer gemäß dem Oberbegriff des Anspruchs 1 zu schaffen, der eine längere Lebensdauer als herkömmliche Drehschwingungsdämpfer aufweist.

Die Aufgabe ist bei einem Drehschwingungsdämpfer mit einer Hauptdämpfungseinrichtung und einer Vordämpfungseinrichtung, die bis zu einem Vordämpfungswinkel wirksam ist und einen Vordämpfungsflansch umfasst, der einerseits an ersten Kopplungsstellen mit Vordämpfungsfederelementen und andererseits an zweiten Kopplungsstellen mit einer Nabeneinrichtung gekoppelt ist, dadurch gelöst, dass die Reibpaarungen der Kontaktpartner an den ersten und/oder zweiten Kopplungsstellen im Hinblick auf Reibung optimiert sind. Bei Verdrehwinkeln, die kleiner als ein Vordämpfungswinkel sind, wird das Moment von der Vordämpfungseinrichtung über die Vordämpfungsfederelemente und den Vordämpfungsflansch in die Nabeneinrichtung eingeleitet. Bei Verdrehwinkeln, die größer als der Vordämpfungswinkel sind, wird das Moment nur über die Hauptdämpfungseinrichtung, vorzugsweise an der Vordämpfungseinrichtung vorbei, in die Nabeneinrichtung eingeleitet. Durch die Optimierung der Reibpaarungen der Kontaktpartner kann der Verschleiß deutlich reduziert werden, ohne dass die Festigkeit des Vordämpfungsflanschs beeinträchtigt wird, was zum Beispiel bei einer Ausführung des Vordämpfungsflanschs aus Kunststoff der Fall sein könnte.

Ein erfindungsgemäßer Drehschwingungsdämpfer ist so definiert, dass jeweils mindestens einer der Kontaktpartner an den ersten und/oder zweiten Kopplungsstellen aus einem reibungsarmen Material, insbesondere aus Kunststoff, gebildet ist. Dabei bedeutet reibungsarm, dass bei einer Reibpaarung des reibungsarmen Materials mit einem relativ harten Material, wie Stahl, nur geringe Reibung auftritt. Die Reibpaarung wird vorzugsweise so ausgelegt, dass der Reibungskoeffizient im Vergleich mit einer Stahl/Stahl-Reibpaarung deutlich reduziert ist. Besonders bevorzugt sind die Reibpaarungen als Kunststoff/Stahl-Reibpaarungen ausgeführt.

Ein erfindungsgemäßer Drehschwingungsdämpfer ist dadurch gekennzeichnet, dass der Vordämpfungsflansch aus Metall, insbesondere aus Stahl, gebildet und an den ersten und/oder zweiten Kopplungsstellen mit Kunststoff bewehrt ist. Durch die Kunststoffbewehrung wird verhindert, dass zwei Kontaktpartner aus Stahl aneinander zur Anlage kommen.

Ein erfindungsgemäßer Drehschwingungsdämpfer ist dadurch gekennzeichnet, dass der Vordämpfungsflansch eine Innenverzahnung aufweist, die in eine Außenverzahnung der Nabeneinrichtung eingreift und mit einem Kunststoffteil, insbesondere einem Kunststoffring, umgeben ist.

Ein erfindungsgemäßer Drehschwingungsdämpfer ist dadurch gekennzeichnet, dass das Kunststoffteil oder der Kunststoffring in die Innenverzahnung des Vordämpfungsflanschs eingeklipst ist. Vorzugsweise ist die Gestalt Kunststoffteils oder des Kunststoffrings an die Gestalt der Innenverzahnung des Vordämpfungsflanschs angepasst.

Ein weiteres bevorzugtes Ausführungsbeispiel des Drehschwingungsdämpfers ist dadurch gekennzeichnet, dass der Vordämpfungsflansch zur Kopplung mit den Vordämpfungsfederelementen Fenster aufweist, die an den ersten Kopplungsstellen mit Kunststoff bewehrt sind. Zu diesem Zweck kann ein Kunststoffelement in die Fenster eingeklipst sein. Die Fenster können aber auch, zumindest teilweise, mit Kunststoff umspritzt sein.

Ein weiteres bevorzugtes Ausführungsbeispiel des Drehschwingungsdämpfers ist dadurch gekennzeichnet, dass die Vordämpfungsfederelemente aus Metall, insbesondere aus Federstahl, gebildet und an den ersten Kopplungsstellen mit Kunststoff bewehrt sind. Vorzugsweise sind die Enden der Vordämpfungsfederelemente, die mit dem Vordämpfungsflansch in Kontakt kommen, mit Kunststoff bewehrt.

Ein weiteres bevorzugtes Ausführungsbeispiel des Drehschwingungsdämpfers ist dadurch gekennzeichnet, dass an den Vordämpfungsfederelementen Kunststoffnäpfe befestigt sind. Bei den Vordämpfungsfederelementen handelt es sich vorzugsweise um Schraubendruckfedern. Vorzugsweise sind die Kunststoffnäpfe in die Enden der Schraubendruckfedern eingeklipst.

Ein weiteres bevorzugtes Ausführungsbeispiel des Drehschwingungsdämpfers ist dadurch gekennzeichnet, dass der Drehschwingungsdämpfer zwei Seitenteile umfasst, die drehfest miteinander verbunden und zwischen denen mindestens ein Zwischenteil, insbesondere zwei Zwischenteile, angeordnet ist beziehungsweise sind, das beziehungsweise die relativ zu den Seitenteilen entgegen der Federwirkung von Federeinrichtungen begrenzt verdrehbar sind. Die Vordämpfungseinrichtung kann symmetrisch oder unsymmetrisch aufgebaut sein. Des Weiteren kann die Vordämpfungseinrichtung mehrere Vordämpfungsstufen umfassen. Die Vordämpfungseinrichtung entfaltet ihre Wirkung bis zu einem bestimmten Verdrehwinkel, der als Vordämpfungswinkel bezeichnet wird. Bei dem Vordämpfungswinkel wirkt ein bestimmtes Moment. Nach Überschreiten des Vordämpfungswinkels schaltet die Vordämpfungseinrichtung ab und die Federeinrichtungen, die auch als Hauptdämpfungseinrichtung bezeichnet werden, entfalten bis zu einem Hauptdämpfungswinkel ihre Hauptdämpfungswirkung. Durch die Kombination der Hauptdämpfungseinrichtung mit der Vordämpfungseinrichtung kann das Dämpfungsverhalten deutlich verbessert werden.

Vorzugsweise sind die Federeinrichtungen der Hauptdämpfungseinrichtung bei dem erfindungsgemäßen Drehschwingungsdämpfer innerhalb von Fenstern angeordnet, die sowohl in den Seitenteilen als auch in dem Zwischenteil beziehungsweise den Zwischenteilen ausgespart sind. Die Fenster in den Zwischenteilen weisen in Umfangsrichtung auf der einen Seite jeweils eine Führungsnase und auf der anderen Seite jeweils eine Ausnehmung auf, in der eine Führungsnase des jeweils anderen Zwischenteils angeordnet ist. Die Führungsnasen entfalten ihre Führungswirkung jeweils nur in einer Lastrichtung, das heißt bei Zug- oder Schubbelastung. Die Ausnehmungen ermöglichen auf einfache Art und Weise eine Bewegung der Zwischenteile mit den Führungsnasen relativ zueinander. Die Führungsnasen ermöglichen eine verschleißfreie Führung der Federeinrichtungen der Hauptdämpfungseinrichtung. Bei den Federeinrichtungen handelt es sich vorzugsweise um Druckfedern, die als Schraubendruckfedern ausgeführt sind. Gemäß einem wesentlichen Aspekt der Erfindung wird das Konzept der verschleißfreien Federführung mit einer Vordämpfungseinrichtung kombiniert.

Ein bevorzugtes Ausführungsbeispiel des Drehschwingungsdämpfers ist dadurch gekennzeichnet, dass sich jeweils ein Abstandsbolzen, der fest mit den Seitenteilen verbunden ist, durch die Ausnehmungen der Fenster hindurch erstreckt. Die Abstandbolzen dienen dazu, die Seitenteile in axialer Richtung in einem definierten Abstand zueinander anzuordnen. Über die Abstandsbolzen wird ein Drehmoment von den Seitenteilen in Abhängigkeit von der Lastrichtung auf eines der Zwischenteile übertragen.

Ein weiteres bevorzugtes Ausführungsbeispiel des Drehschwingungsdämpfers ist dadurch gekennzeichnet, dass die Abstandsbolzen in Umfangsrichtung einen Anschlag für jeweils ein Zwischenteil bilden. Vorzugsweise ist die Gestalt der Ausnehmungen an die Gestalt der Abstandsbolzen angepasst.

Ein weiteres bevorzugtes Ausführungsbeispiel des Drehschwingungsdämpfers ist dadurch gekennzeichnet, dass die Zwischenteile jeweils einen Nabenflansch umfassen, der mit einer Nabe gekoppelt ist. Vorzugsweise ist die Nabe drehfest mit einer Getriebeeingangswelle verbunden.

Ein weiteres bevorzugtes Ausführungsbeispiel des Drehschwingungsdämpfers ist dadurch gekennzeichnet, dass die Nabe mit einer Außenverzahnung versehen ist, die mit einer Innenverzahnung der Zwischenteile zusammenwirkt. Dadurch wird die Übertragung eines Drehmoments von den Zwischenteilen auf die Nabe ermöglicht.

Ein weiteres bevorzugtes Ausführungsbeispiel des Drehschwingungsdämpfers ist dadurch gekennzeichnet, dass zwischen der Außenverzahnung der Nabe und der Innenverzahnung der Zwischenteile in Umfangsrichtung ein definiertes Spiel vorhanden ist. Je nach Lastrichtung ist die Nabe mit ihrer Außenverzahnung mit dem einen oder dem anderen Zwischenteil drehfest verbunden.

Ein weiteres bevorzugtes Ausführungsbeispiel des Drehschwingungsdämpfers ist dadurch gekennzeichnet, dass sich die Führungsnasen jeweils aus einer Ebene, in der sich das zugehörige Zwischenteil ausdehnt, in Richtung einer Längsachse der zugehörigen Federeinrichtung erstreckt. Dadurch können Axialkraftkomponenten, die durch einen außermittigen Kraftangriff auf die Federeinrichtungen entstehen und zu einem seitlichen Auswandern/Ausknicken der Federeinrichtungen führen könnten, kompensiert werden.

Ein weiteres bevorzugtes Ausführungsbeispiel des Drehschwingungsdämpfers ist dadurch gekennzeichnet, dass die Federeinrichtungen jeweils mindestens ein Schraubenfederelement mit zwei Enden umfassen, in die jeweils eine der Führungsnasen eingreift. Alternativ kann das Schraubenfederelement auch außen von einem Führungselement umgriffen werden.

Ein weiteres bevorzugtes Ausführungsbeispiel des Drehschwingungsdämpfers ist dadurch gekennzeichnet, dass die Federeinrichtungen jeweils ein äußeres und ein inneres Schraubenfederelement mit zwei Enden umfassen, in die jeweils eine der Führungsnasen eingreift. Das äußere Schraubenfederelement ist über das innere Schraubenfederelement durch die Führungsnasen geführt.

Ein weiteres bevorzugtes Ausführungsbeispiel des Drehschwingungsdämpfers ist dadurch gekennzeichnet, dass die Führungsnasen einstückig mit dem zugehörigen Zwischenteil verbunden sind. Bei dem Zwischenteil handelt es sich vorzugsweise um ein Blechteil, aus dem die Führungsnasen herausgeprägt sind.

Ein weiteres bevorzugtes Ausführungsbeispiel des Drehschwingungsdämpfers ist dadurch gekennzeichnet, dass die Vordämpfungseinrichtung eine Zwischennabe umfasst, die mit einem definierten Vordämpfungsverdrehspiel drehfest mit einer beziehungsweise der Nabe verbindbar ist. Die Zwischennabe ist in radialer Richtung zwischen der Nabe und dem Zwischenteil beziehungsweise den Zwischenteilen angeordnet.

Ein weiteres bevorzugtes Ausführungsbeispiel des Drehschwingungsdämpfers ist dadurch gekennzeichnet, dass das definierte Vordämpfungsverdrehspiel dem zweifachen Wert des Vordämpfungswinkels entspricht. Vorzugsweise ist der Vordämpfungswinkel in beiden Drehrichtungen gleich.

Ein weiteres bevorzugtes Ausführungsbeispiel des Drehschwingungsdämpfers ist dadurch gekennzeichnet, dass das definierte Vordämpfungsverdrehspiel zwischen einer Außenverzahnung der Nabe und einer Innenverzahnung der Zwischennabe vorgesehen ist. Nach Überwinden des definierten Vordämpfungsverdrehspiels kommen die Verzahnungen der Nabe und der Zwischennabe aneinander so in Anschlag, dass eine drehfeste Verbindung zwischen der Nabe und der Zwischennabe geschaffen wird.

Ein weiteres bevorzugtes Ausführungsbeispiel des Drehschwingungsdämpfers ist dadurch gekennzeichnet, dass die Zwischennabe mit einem definierten Freiwinkel drehfest mit mindestens einem der Zwischenteile verbindbar ist. Der Freiwinkel ergibt sich aus der Differenz zwischen dem beziehungsweise einem Hauptdämpfungswinkel und dem Vordämpfungswinkel.

Ein weiteres bevorzugtes Ausführungsbeispiel des Drehschwingungsdämpfers ist dadurch gekennzeichnet, dass der Freiwinkel durch ein Hauptdämpfungsverdrehspiel zwischen einer Außenverzahnung der Zwischennabe und einer Innenverzahnung des mindestens einen Zwischenteils vorgegeben ist. Nach Überwinden des Freiwinkels beziehungsweise des Hauptdämpfungsverdrehspiels kommen die Verzahnungen der Zwischennabe und des mindestens einen Zwischenteils aneinander so in Anschlag, dass eine drehfeste Verbindung zwischen der Zwischennabe und dem mindestens einen Zwischenteil geschaffen wird.

Ein weiteres bevorzugtes Ausführungsbeispiel des Drehschwingungsdämpfers ist dadurch gekennzeichnet, dass die Vordämpfungseinrichtung ein Vordämpfungsgehäuse umfasst, in welchem ein Vordämpfungsflansch unter Zwischenschaltung von Vordämpfungsfederelementen mit dem Vordämpfungsgehäuse gekoppelt ist. Bei Verdrehwinkeln, die kleiner als der Vordämpfungswinkel sind, wird das Moment von dem Vordämpfungsgehäuse über die Vordämpfungsfederelemente auf den Vordämpfungsflansch übertragen.

Ein weiteres bevorzugtes Ausführungsbeispiel des Drehschwingungsdämpfers ist dadurch gekennzeichnet, dass der Vordämpfungsflansch quasi umfangsspielfrei mit der Nabe verbunden ist. Dabei bedeutet quasi umfangsspielfrei, dass maximal ein geringes Fügespiel vorhanden ist. Bei Verdrehwinkeln, die größer als der Vordämpfungswinkel sind, wird das Moment direkt von der Zwischennabe auf die Nabe übertragen.

Ein weiteres bevorzugtes Ausführungsbeispiel des Drehschwingungsdämpfers ist dadurch gekennzeichnet, dass der Vordämpfungsflansch eine Innenverzahnung aufweist, die sich in Eingriff mit einer beziehungsweise der Außenverzahnung der Nabe befindet. Vorzugsweise sind die Zähne der Verzahnungen der Nabe und des Vordämpfungsflanschs gleichmäßig über den Umfang verteilt.

Ein weiteres bevorzugtes Ausführungsbeispiel des Drehschwingungsdämpfers ist dadurch gekennzeichnet, dass das Vordämpfungsgehäuse quasi umfangsspielfrei mit der Zwischennabe verbunden ist. Dabei bedeutet quasi umfangsspielfrei, dass maximal ein geringes Fügespiel vorhanden ist.

Ein weiteres bevorzugtes Ausführungsbeispiel des Drehschwingungsdämpfers ist dadurch gekennzeichnet, dass das Vordämpfungsgehäuse zwei Vordämpfungskäfige umfasst, die drehfest miteinander verbunden sind. Die Vordämpfungskäfige sind vorzugsweise als Gleichteile ausgeführt, um Werkzeugkosten zu sparen. Die Vordämpfungskäfige können aber auch unterschiedlich ausgeführt sein und sind, zum Beispiel durch Stifte und Bohrungen, vorzugsweise formschlüssig miteinander verbunden.

Ein weiteres bevorzugtes Ausführungsbeispiel des Drehschwingungsdämpfers ist dadurch gekennzeichnet, dass einer der Vordämpfungskäfige eine Innenverzahnung aufweist, die sich in Eingriff mit einer Außenverzahnung der Zwischennabe befindet. Vorzugsweise sind die Zähne der Verzahnungen der Zwischennabe und des Vordämpfungskäfigs gleichmäßig über den Umfang verteilt.

Ein weiteres bevorzugtes Ausführungsbeispiel des Drehschwingungsdämpfers ist dadurch gekennzeichnet, dass die Vordämpfungseinrichtung so zwischen einem der Seitenteile und dem Zwischenteil beziehungsweise einem der Zwischenteile angeordnet ist, dass in einem Hauptdämpfungsbetrieb in einer Lastrichtung, insbesondere bei Zugbelastung, mehr Reibstellen als in der anderen Lastrichtung, insbesondere bei Schubbelastung, wirksam sind. Dadurch wird im Zugbetrieb eine größere Reibungsdämpfung/Hysterese ermöglicht. Gleichzeitig wird im Schubbetrieb eine bessere Schwingungsisolation ermöglicht.

Ein weiteres bevorzugtes Ausführungsbeispiel des Drehschwingungsdämpfers ist dadurch gekennzeichnet, dass die Vordämpfungseinrichtung so zwischen einem der Seitenteile und dem Zwischenteil beziehungsweise einem der Zwischenteile angeordnet ist, dass in einem Hauptdämpfungsbetrieb in einer Lastrichtung, insbesondere bei Zugbelastung, doppelt so viele Reibstellen wie in der anderen Lastrichtung, insbesondere bei Schubbelastung, wirksam sind. Auf speziell integrierte Reibsteuerscheiben kann verzichtet werden. Vorzugsweise sind bei Zugbelastung vier und bei Schubbelastung zwei Reibstellen wirksam.

Die Erfindung betrifft des Weiteren eine Kupplungsscheibe mit einem vorab beschrieben Drehschwingungsdämpfer. Die Erfindung eignet sich besonders für Kupplungsscheiben von Nutzfahrzeugen und von Personenkraftwagen mit schweren Hauptdämpferfedern.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: ein kartesisches Koordinatendiagramm, in dem eine Drehschwingungsdämpferkennlinie einer Kupplungsscheibe mit einer Vordämpfungseinrichtung dargestellt ist;
- Figur 2: eine Kupplungsscheibe mit einem integrierten Drehschwingungsdämpfer und einer Vordämpfungseinrichtung in der Draufsicht;
- Figur 3: die Kupplungsscheibe aus Figur 2 im Schnitt;
- Figur 4: einen vergrößerten Ausschnitt aus Figur 3;
- Figur 5: eine ähnliche Schnittansicht wie in Figur 4 an einer anderen Stelle der Kupplungsscheibe;
- Figuren 6 und 7: jeweils einen vergrößerten Ausschnitt aus Figur 5;
- Figur 8: die Ansicht eines Schnitts entlang der Linie VIII-VIII aus Figur 7;
- Figur 9: einen vergrößerten Ausschnitt aus Figur 8;
- Figur 10: eine erfindungsgemäße Vordämpfungseinrichtung im Querschnitt;
- Figur 11: die Vordämpfungseinrichtung aus Figur 10 im Längsschnitt und
- Figur 12: die Vordämpfungseinrichtung aus den Figuren 10 und 11 in Explosionsdarstellung.

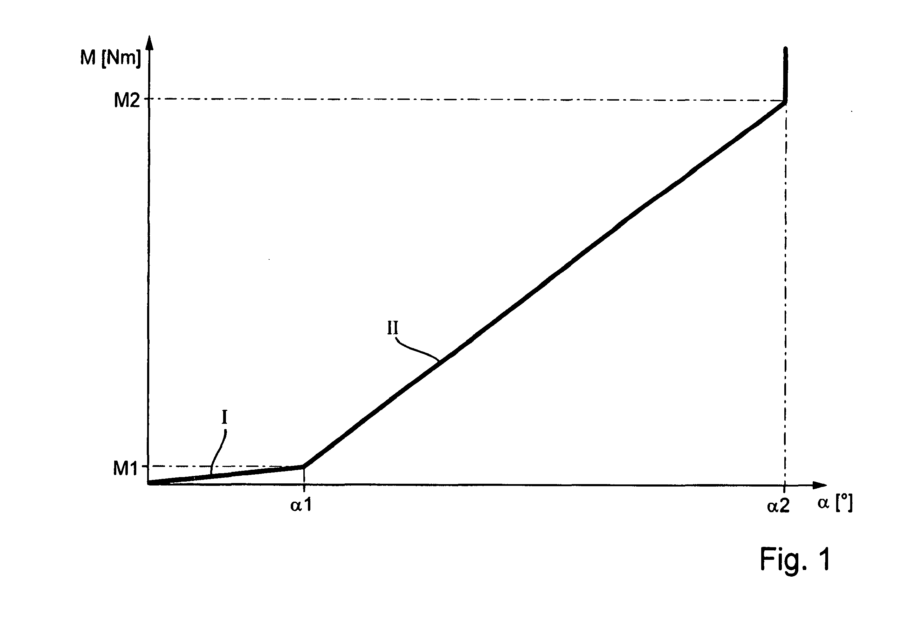

In Figur 1 ist in einem kartesischen Koordinatendiagramm das von der erfindungsgemäßen Kupplungsscheibe übertragene Drehmoment M in Nm über dem Verdrehwinkel α in Grad in Form einer Kennlinie aufgetragen. Dabei ist die Kennlinie in einer Verdrehrichtung dargestellt. Die Kennlinie kann in beiden Drehrichtungen symmetrisch oder unsymmetrisch verlaufen. Die Kennlinie in der dargestellten Verdrehrichtung umfasst einen ersten Kennlinienabschnitt I, in dem eine Vordämpfungseinrichtung wirksam ist, die in die Kupplungsscheibe integriert ist. Die Vordämpfungseinrichtung entfaltet ihre Wirkung bis zu einem Vordämpfungswinkel α₁. Bei dem Vordämpfungswinkel α₁ wirkt das Moment M1, das auch als Vordämpfungsmoment bezeichnet wird. Bei Erreichen des Vordämpfungswinkels α₁ schaltet die Vordämpfungseinrichtung ab und wirkt eine in die Kupplungsscheibe integrierte Hauptdämpfungseinrichtung. Die Hauptdämpfungseinrichtung wirkt bis zu einem Hauptdämpfungswinkel α₂. Das zugehörige Anschlagmoment ist mit M2 bezeichnet.

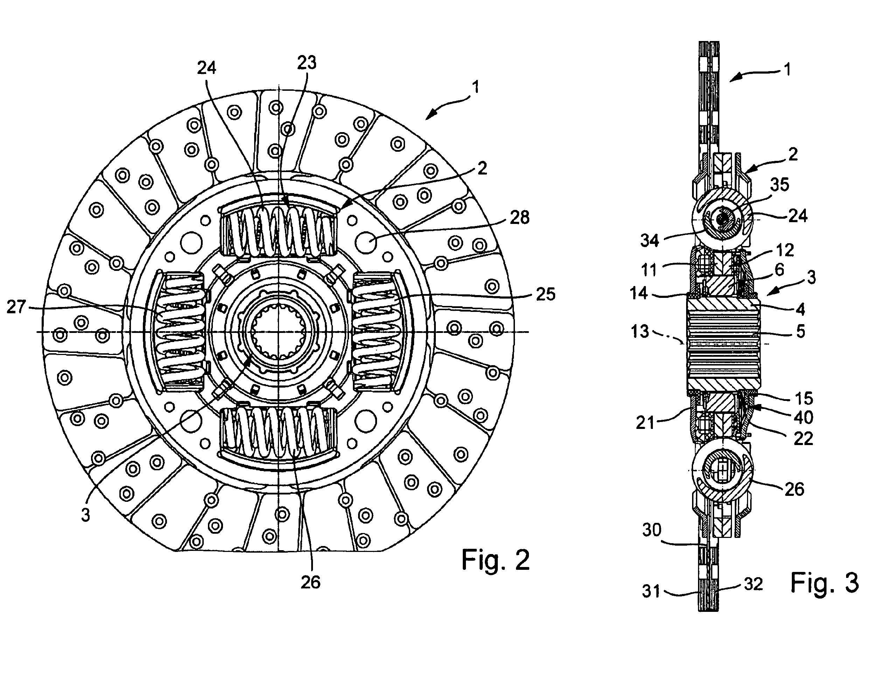

In den Figuren 2 und 3 ist eine Kupplungsscheibe 1 mit verschleißfreier Hauptdämpferführung und integrierter Vordämpfungseinrichtung in der Draufsicht und im Schnitt dargestellt. In die Kupplungsscheibe 1 ist ein Drehschwingungsdämpfer 2 integriert. Radial innen umfasst die Kupplungsscheibe 1 eine Nabeneinrichtung 3, die eine Nabe 4 mit einer Innenverzahnung 5 umfasst. Die Innenverzahnung 5 dient dazu, die Kupplungsscheibe 1 im Antriebsstrang eines Kraftfahrzeugs drehfest mit einer Getriebeeingangswelle zu verbinden. Gemäß einem wesentlichen Aspekt der Erfindung umfasst die Nabeneinrichtung 3 zusätzlich zu der Nabe 4 eine Zwischennabe 6. Die Zwischennabe 6 ist als separates Bauteil ausgeführt. Die Nabeneinrichtung 3 ist drehfest mit zwei Zwischenteilen 11, 12 verbindbar. Die Zwischenteile 11, 12 erstrecken sich flanschartig in radialer Richtung und werden daher auch als Nabenflansche oder kurz Flansche bezeichnet. Die Begriffe radial, axial und in Umfangsrichtung beziehen sich im Rahmen der vorliegenden Erfindung auf eine Drehachse 13 der Kupplungsscheibe 1.

Durch Lagereinrichtungen 14, 15 sind zwei Seitenteile 21, 22 relativ zu der Nabeneinrichtung 3 beziehungsweise den Zwischenteilen 11, 12 gegen die Wirkung mindestens einer Federeinrichtung 23 begrenzt verdrehbar, die auch als Hauptdämpfungseinrichtung bezeichnet wird. Die Federeinrichtung 23 umfasst in Umfangsrichtung gleichmäßig verteilt vier Federelemente 24, 25, 26 und 27. Der Verdrehwinkel wird durch Abstandsbolzen 28 begrenzt, die an den Seitenteilen 21, 22 befestigt sind und sich durch die Zwischenteile 11, 12 hindurch erstrecken. Die Abstandsbolzen 28 sind vorzugsweise als Stufenbolzen ausgeführt und mit den Seitenteilen 21, 22 vernietet. Die Zwischenteile 11, 12 sind in axialer Richtung zwischen den Seitenteilen 21, 22 angeordnet. An dem Seitenteil 11 ist radial außen eine Belagträgerscheibe 30 mit zwei Reibbelaghälften 31, 32 befestigt. In der Schnittansicht der Figur 3 sieht man, dass innerhalb des als Schraubendruckfeder ausgeführten Federelements 24 zwei weitere Schraubendruckfedern 34, 35 angeordnet sind. In der Nähe der Lagereinrichtung 15 ist eine Reibeinrichtung 40 in die Kupplungsscheibe 1 integriert. Die Reibeinrichtung 40 umfasst mindestens eine Tellerfeder und mindestens einen Reibring.

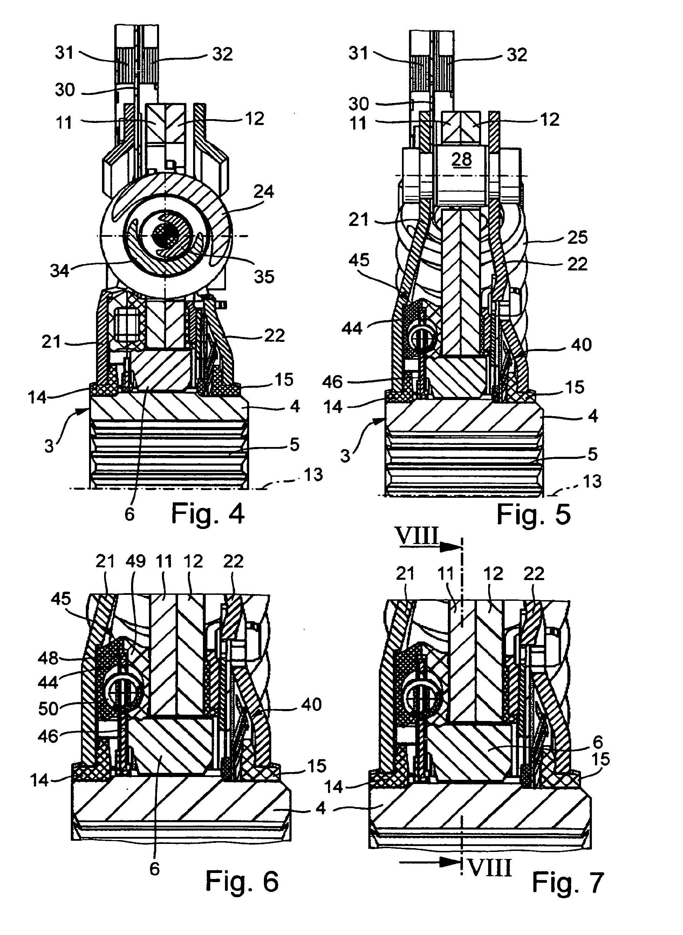

In den Figuren 4 bis 6 sind verschiedene Schnittansichten vergrößert dargestellt. In der Nähe der Lagereinrichtung 14 ist eine Vordämpfungseinrichtung 44 in die Kupplungsscheibe 1 beziehungsweise die Drehschwingungsdämpfungseinrichtung 2 integriert. Die Vordämpfungseinrichtung 44 umfasst ein Vordämpfungsgehäuse 45, das in axialer Richtung zwischen dem Seitenteil 21 und dem Zwischenteil 11 angeordnet ist. In dem Vordämpfungsgehäuse 45 ist ein Vordämpfungsflansch 46 angeordnet. Der Vordämpfungsflansch 46 ist relativ zu zwei Vordämpfungskäfigen 48, 49 drehbar, die das Vordämpfungsgehäuse 45 bilden. Der Vordämpfungsflansch 46 ist gegen die Wirkung einer Vordämpfungsfedereinrichtung 50 verdrehbar, die in dem Vordämpfungsgehäuse 45 angeordnet ist.

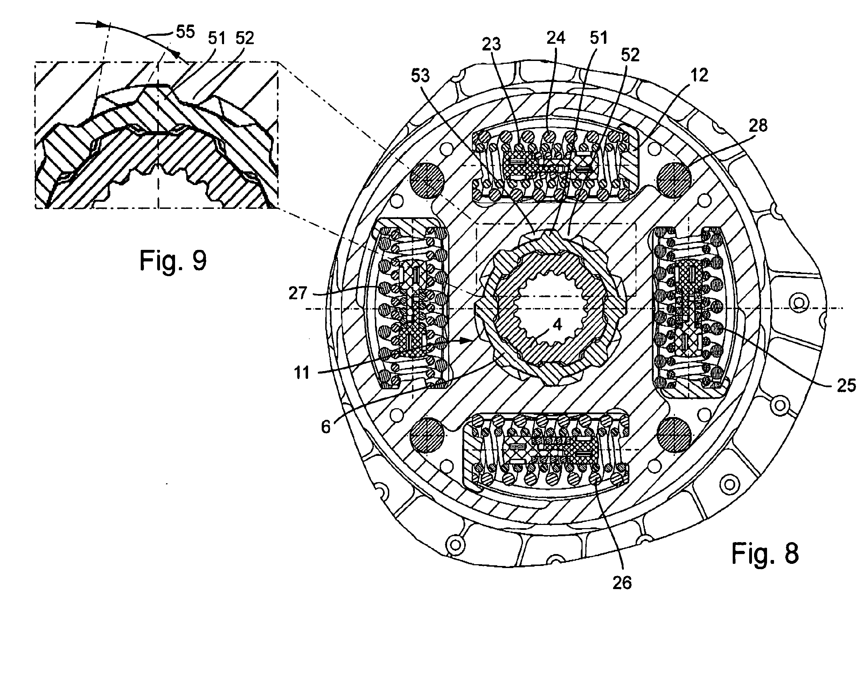

In Figur 8 ist die Ansicht eines Schnitts entlang der Linie VIII-VIII aus Figur 7 dargestellt, die der Figur 6 entspricht. In Figur 8 sieht man, dass die Zwischennabe 6 eine Außenverzahnung 51 aufweist, die mit einer Innenverzahnung 52 zusammenwirkt, die an dem Zwischenteil 11 vorgesehen ist. An dem Zwischenteil 12 ist eine weitere Innenverzahnung 53 vorgesehen, die ebenfalls mit der Außenverzahnung 51 der Zwischennabe 6 zusammenwirkt.

In Figur 9 ist ein Ausschnitt aus Figur 8 vergrößert dargestellt. In Figur 9 ist durch einen Doppelpfeil 55 das Verdrehspiel angedeutet, das zwischen der Außenverzahnung 51 der Zwischennabe 6 und der Innenverzahnung 52 des Zwischenteils 11 vorgesehen ist. Das Verdrehspiel 55 ergibt sich aus der Differenz zwischen dem Hauptdämpfungswinkel α₂ und dem Vordämpfungswinkel α₁. Die Federn 24, 25, 26, 27 in Figur 8 werden auch als Hauptdämpferdruckfedern bezeichnet und dienen dazu, das Moment je nach Drehrichtung auf eines der Zwischenteile 11, 12 zu übertragen. Die Zwischenteile 11, 12 sind durch die Hauptdämpferdruckfedern 24 bis 27 miteinander gekoppelt.

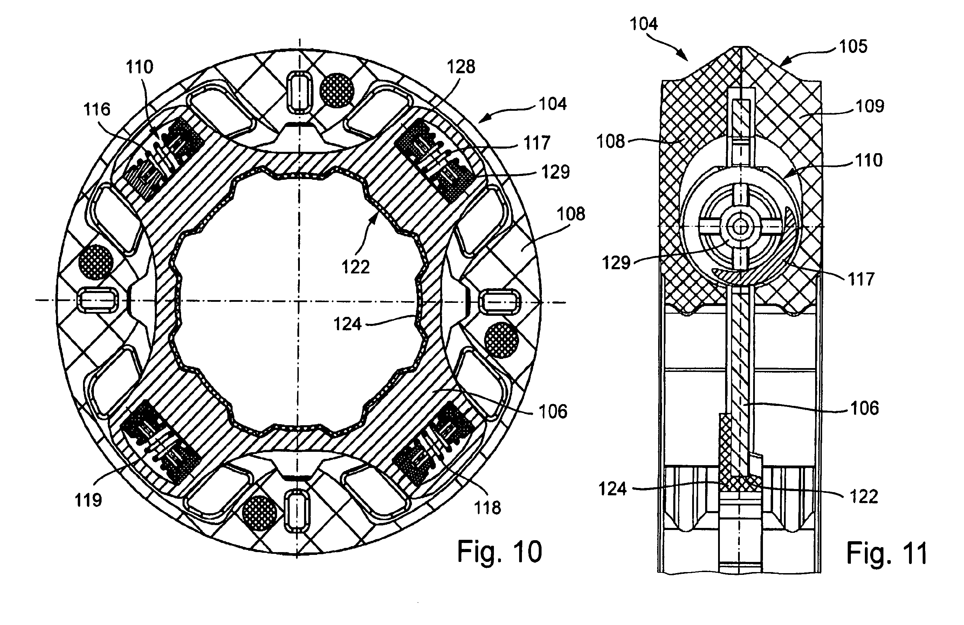

In den Figuren 10 und 11 ist eine erfindungsgemäße Vordämpfungseinrichtung 104 im Quer- und im Längsschnitt dargestellt. Die Vordämpfungseinrichtung 104 umfasst ein Vordämpfungsgehäuse 105, in dem ein Vordämpfungsflansch 106 angeordnet ist. Der Vordämpfungsflansch 106 ist relativ zu zwei Vordämpfungskäfigen 108, 109 drehbar, die das Vordämpfungsgehäuse 105 bilden. Der Vordämpfungsflansch 106 ist gegen die Wirkung einer Vordämpfungsfedereinrichtung 110 verdrehbar, die in dem Vordämpfungsgehäuse 105 angeordnet ist.

In Figur 10 sieht man, dass die Vordämpfungsfedereinrichtung 110 vier Vordämpfungsfederelemente 116, 117, 118 und 119 umfasst. Bei Verdrehwinkeln, die kleiner als der Vordämpfungswinkel sind, wird das Moment über die Vordämpfungsfederelemente 116 bis 119, die vorzugsweise als Schraubendruckfedern ausgeführt sind, auf den Vordämpfungsflansch 106 übertragen, der quasi spielfrei drehfest mit der Nabe (4 in den Figuren 3 bis 8) verbunden ist. Bei Verdrehwinkeln, die größer als der Vordämpfungswinkel sind, wird das Moment direkt von der Zwischennabe (6 in den Figuren 3 bis 8) auf die Nabe übertragen.

Die beiden Vordämpfungskäfige 108, 109 übertragen das Moment auf die Vordämpfungsfederelemente 116 bis 119. Gemäß einem wesentlichen Aspekt der Erfindung sind die Vordämpfungsfederelemente 116 bis 119 an ihren Enden jeweils mit Kunststoffnäpfen 128, 129 bewehrt. Bei den Vordämpfungsfederelementen 116 bis 119 handelt es sich vorzugsweise um Schraubendruckfedern aus Federstahl. Der Vordämpfungsflansch 106 ist vorzugsweise aus Stahl gebildet. Die Kunststoffnäpfe 128, 129 übertragen das Moment auf den Vordämpfungsflansch 106. Alternativ können anstelle der Kunststoffnäpfe 128, 129 auch Kunststoffeinsätze in die Fenster des Vordämpfungsflanschs 106 eingeklipst oder gespritzt werden.

Radial innen ist der Vordämpfungsflansch 106 mit einer Innenverzahnung 122 ausgestattet. Die Innenverzahnung 122 ist im zusammengebauten Zustand der Kupplungsscheibe umfangsspielfrei, drehfest mit der Nabe (4 in den Figuren 3 bis 8) verbunden. Gemäß einem weiteren wesentlichen Aspekt der Erfindung ist ein ebenfalls verzahntes und vorteilhaft mit etwa konstanter Wandstärke versehenes Kunststoffteil 124 in die Innenverzahnung 122 des Vordämpfungsflanschs 106 eingeklipst oder gespritzt. Das Kunststoffteil 124 dient dazu, einen reibungsarmen Kontakt zu der Nabenverzahnung herzustellen.

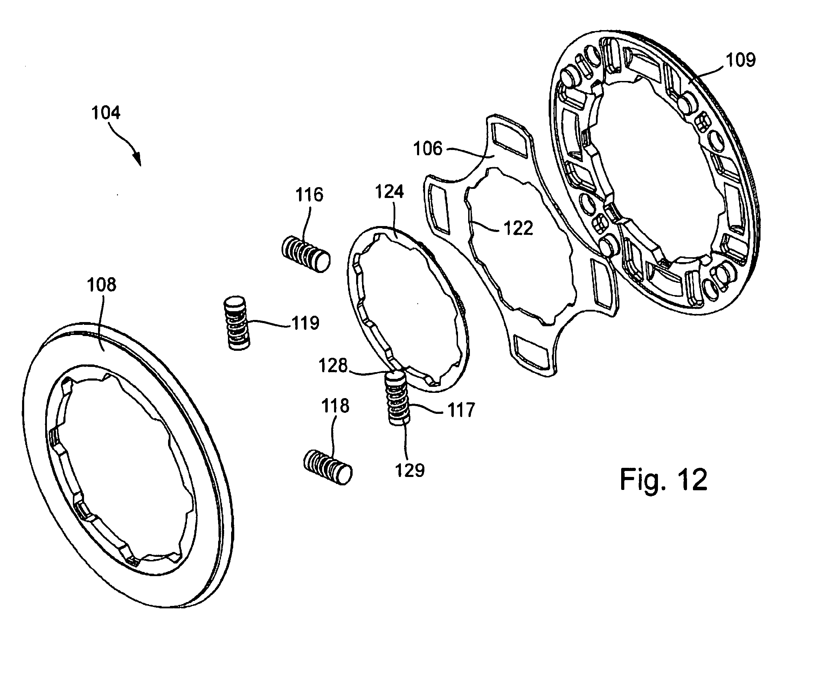

In Figur 12 ist die Vordämpfungseinrichtung 104 aus den Figuren 10 und 11 in Explosionsdarstellung gezeigt. Die vorab beschriebenen Maßnahmen, welche die Bewehrung von Stahlteilen mit Kunststoff betreffen, dienen der Reduzierung des durch Mikrobewegungen hervorgerufenen Kontaktverschleißes zwischen dem Vordämpfungsflansch 106 und seinen Kontaktpartnern.

### Bezugszeichenliste

| | | | |
|---|---|---|---|
| 1. | Kupplungsscheibe | 50. | Vordämpfungsfedereinrichtung |
| 2. | Drehschwingungsdämpfer | 51. | Außenverzahnung |
| 3. | Nabeneinrichtung | 52. | Innenverzahnung |
| 4. | Nabe | 53. | Innenverzahnung |
| 5. | Innenverzahnung | 55. | Doppelpfeil |
| 6. | Zwischennabe | 104. | Vordämpfungseinrichtung |
| 11. | Zwischenteil | 105. | Vordämpfungsgehäuse |
| 12. | Zwischenteil | 106. | Vordämpfungsflansch |
| 13. | Drehachse | 108. | Vordämpfungskäfig |
| 14. | Lagereinrichtung | 109. | Vordämpfungskäfig |
| 15. | Lagereinrichtung | 110. | Vordämpfungsfedereinrichtung |
| 21. | Seitenteil | 116. | Vordämpfungsfederelement |
| 22. | Seitenteil | 117. | Vordämpfungsfederelement |
| 23. | Federeinrichtung | 118. | Vordämpfungsfederelement |
| 24. | Federelement | 119. | Vordämpfungsfederelement |
| 25. | Federelement | 122. | Innenverzahnung |
| 26. | Federelement | 124. | Kunststoffteil |
| 27. | Federelement | 128. | Kunststoffnapf |
| 28. | Abstandsbolzen | 129. | Kunststoffnapf |
| 30. | Belagträgerscheibe | | |
| 31. | Reibbelaghälfte | | |
| 32. | Reibbelaghälfte | | |
| 34. | Schraubendruckfeder | | |
| 35. | Schraubendruckfeder | | |
| 40. | Reibeinrichtung | | |
| 44. | Vordämpfungseinrichtung | | |
| 45. | Vordämpfungsgehäuse | | |
| 46. | Vordämpfungsflansch | | |
| 48. | Vordämpfungskäfig | | |
| 49. | Vordämpfungskäfig | | |

## Patentansprüche

1. Drehschwingungsdämpfer mit einer Hauptdämpfungseinrichtung und einer Vordämpfungseinrichtung (44;104), die bis zu einem Vordämpfungswinkel (α₁) wirksam ist und einen Vordämpfungsflansch (46; 1 06) umfasst, der einerseits an ersten Kopplungsstellen mit Vordämpfungsfederelementen (116-119) und andererseits an zweiten Kopplungsstellen mit einer Nabeneinrichtung (3) gekoppelt ist, wobei die Reibpaarungen der Kontaktpartner an den ersten und/oder zweiten Kopplungsstellen im Hinblick auf Reibung optimiert sind, wobei die Reibpaarung so ausgelegt ist, dass der Reibungskoeffizient im Vergleich mit einer Stahl/Stahl-Reibpaarung deutlich reduziert ist, wobei jeweils mindestens einer der Kontaklpartner an den ersten und/oder zweiten Kopplungsstellen aus einem reibungsarmen Material, insbesondere aus Kunststoff, gebildet ist, **dadurch gekennzeichnet, dass**
der Vordämpfungsflansch (46;106) aus Metall, insbesondere aus Stahl, gebildet und an den ersten und/oder zweiten Kopplungsstellen mit Kunststoff bewehrt ist und
eine Innenverzahnung (122) aufweist, die in eine Außenverzahnung der Nabeneinrichtung (3,6) eingreift und mit einem Kunststoffteil (124) umgeben ist,
das in die Innenverzahnung (122) des Vordärnpfungsflanschs (106) eingeklipst ist.

2. Drehschwingungsdämpfer nach Ansprüch 1, **dadurch gekennzeichnet, dass** der Vordämpfungsflansch (106) zur Kopplung mit den Vordämpfungsfederelementen (116-119) Fenster aufweist, die an den ersten Kopplungsstellen mit Kunststoff bewehrt sind.

3. Drehschwingungsdämpfer nach einem der Ansprüche 1 oder 2 **dadurch gekennzeichnet, dass** die Vordämpfungsfederelemente (116-119) aus Metall, insbesondere aus Federstahl, gebildet und an den ersten Kopplumsstellen mit Kunststoff bewehrt sind.

4. Drehschwingungsdämpfer nach dem vorhergehenden Anspruch, **dadurch gekennzeichnet, dass** an den Vordämpfungsfederelementen (116-119) Kunststoffnäpfe (128,129) befestigt sind.

5. Kupplungsscheibe mit einem Drehschwingungsdämpfer nach einem der vorhergehenden Ansprüche.

## Claims

1. Torsional vibration damper with a main damping device and with a pre-damping device (44; 104) which is active up to a pre-damping angle (α₁) and comprises a pre-damping flange (46; 106) which is coupled, on the one hand, at first coupling points to pre-damping spring elements (116-119) and, on the other hand, at second coupling points to a hub device (3), the frictional pairings of the contact partners at the first and/or second coupling points being optimized in terms of friction, in each case at least one of the contact partners at the first and/or the second coupling points being formed from a low-friction material, in particular from plastic, **characterized in that** the pre-damping flange (46; 106) is formed from metal, in particular from steel, and is reinforced at the first and/or the second coupling points with plastic, and has an internal toothing (122) which engages into an external toothing of the hub device (3, 6) and is surrounded by a plastic part (124) which is snapped into the internal toothing (122) of the pre-damping flange (106).

2. Torsional vibration damper according to Claim 1, **characterized in that** the pre-damping flange (106) has, for coupling with the pre-damping spring elements (116-119), apertures which are reinforced at the first coupling points with plastic.

3. Torsional vibration damper according to either one of Claims 1 and 2, **characterized in that** the pre-damping spring elements (116-119) are formed from metal, in particular spring steel, and are reinforced at the first coupling points with plastic.

4. Torsional vibration damper according to the preceding claim, **characterized in that** plastic cups (128, 129) are fastened to the pre-damping spring elements (116-119).

5. Clutch disc having a torsional vibration damper according to one of the preceding claims.

## Revendications

1. Amortisseur d'oscillations de torsion comprenant un dispositif d'amortissement principal et un dispositif de pré-amortissement (44 ; 104), qui agit jusqu'à un angle de pré-amortissement (α₁) et qui comprend une bride de pré-amortissement (46 ; 106), qui est accouplée d'une part en des premiers points d'accouplement à des éléments de ressort de pré-amortissement (116-119) et d'autre part en des deuxièmes points d'accouplement à un dispositif de moyeu (3), les paires de friction des partenaires de contact étant optimisées en termes de friction au niveau des premiers et/ou deuxièmes points d'accouplement, la paire de friction étant conçue de telle sorte que le coefficient de friction soit nettement réduit par comparaison avec une paire de friction acier/acier, à chaque fois au moins l'un des partenaires de contact au niveau des premiers et/ou des deuxièmes points d'accouplement étant formé d'un matériau à faible friction, en particulier de plastique,
**caractérisé en ce que**
la bride de pré-amortissement (46 ; 106) est formée en métal, en particulier en acier, et est renforcée de plastique au niveau des premiers et/ou des deuxièmes points d'accouplement, et présente une denture interne (122) qui vient en prise dans une denture externe du dispositif de moyeu (3, 6) et est entourée d'une partie en plastique (124) qui est enclipsée dans la denture interne (122) de la bride de pré-amortissement (106).

2. Amortisseur d'oscillations de torsion selon la revendication 1, **caractérisé en ce que** la bride de pré-amortissement (106) pour l'accouplement aux éléments de ressort de pré-amortissement (116-119) présente des fenêtres qui sont renforcées avec du plastique au niveau des premiers points d'accouplement.

3. Amortisseur d'oscillations de torsion selon l'une quelconque des revendications 1 ou 2, **caractérisé en ce que** les éléments de ressort de pré-amortissement (116-119) sont formés en métal, en particulier en acier à ressort, et sont renforcés avec du plastique au niveau des premiers points d'accouplement.

4. Amortisseur d'oscillations de torsion selon la revendication précédente, **caractérisé en ce que** des éléments en forme de coupelle en plastique (128, 129) sont fixés sur les éléments de ressort de pré-amortissement (116-119).

5. Disque d'embrayage comprenant un amortisseur d'oscillations de torsion selon l'une quelconque des revendications précédentes.
